# EUROPEAN PATENT APPLICATION

(11) **EP 4 340 190 A1**
(43) Date of publication of application: **20.03.2024**
(21) Application number: 22195400.1
(22) Date of filing: 13.09.2022
(51) Int. Cl.: H02K 7/116, H02K 9/19, H02K 11/33, B60K 1/00

(54) **ROTARY ELECTRIC MACHINE AND INVERTER INTEGRATION**

(71) Applicant: Valeo eAutomotive Germany GmbH, 91056 Erlangen (DE)
(72) Inventor: Lewandowski, Marek, 91056 C/o VeA, Erlangen (DE)
(74) Representative: Valeo Powertrain Systems

(57) **Abstract**

The invention concerns an electric drive (10) comprising a rotary electric machine (20) having a stator (21) and an inverter (30) configured to be electrically connected to the rotary electric machine (20), the electric drive (10) further comprising an intermediary module (40) having a cooling system (41), the rotary electric machine (20) and the inverter (30) being located on opposite sides of and contiguously to the intermediary module (40), an end portion (23) of a stator winding (22) of the stator (21) extending from the rotary electric machine (20) and being directly electrically connected to a respective electrical terminal (32) of the inverter (30), said end portion (23) of the stator winding (22) passing through the intermediary module (40) such that to be cooled by the cooling system (41) of the intermediary module (40).

## Description

### FIELD OF THE INVENTION

The present invention belongs to the field of rotary electric machines and inverters configured to be on board an automotive vehicle, such as an electric vehicle (EV) or a hybrid vehicle (HV). In particular, the present invention relates to the cooling and to the integration of the rotary electric machine and the inverter.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure the propulsion of the vehicle. In a general manner, the rotary electric machine comprises a stator, referring to a fixed part of the rotary electric machine, and a rotor, referring to a rotating part of the rotary electric machine. The rotor comprises a rotor shaft configured to ensure the transmission of the mechanical power between the rotary electric machine and an exterior driven apparatus, notably the wheels of the vehicle, through a gearbox.

Then, the electric drive comprises the rotary electric machine and an inverter configured to convert a direct current voltage coming from the high-voltage power supply battery into an alternating current voltage so as supply the stator of the rotary electric machine with the AC voltage. The AC voltage may be a multiphase AC voltage, especially a three-phase voltage. Generally, the inverter is electrically connected to the stator of the rotary electric machine through electrical conductors, for instance AC busbars, connected on one side to windings of the stator and on another side to a respective terminal of the power stage of the inverter.

The electric drive generates heat in service and thus requires to be efficiently cooled, such that to improve its in service life. A conventional solution is to have separate cooling systems for both the rotary electric machine and for the inverter. Then, the electrical conductor is generally cooled passively on both sides by the cooling systems respectively of the rotary electric machine and of the inverter. The cross-section of the electrical conductor has thus to be high enough to have an adequate thermoelectrical behavior.

In this context, the main objective of the present invention is to provide an electric drive comprising the rotary electric machine and the inverter, which presents an improved heat dissipation, and which is more compact.

### SUMMARY OF THE INVENTION

More specifically, the present invention relates to an electric drive comprising a rotary electric machine and an inverter configured to be electrically connected to the rotary electric machine. The rotary electric machine has a stator comprising at least one stator winding. The inverter is especially configured to convert a direct current voltage coming from a high-voltage power supply battery into an alternating current voltage so as supply the stator of the rotary electric machine with the AC voltage. The AC voltage may be a multiphase AC voltage, especially a three-phase voltage.

Then, the electric drive further comprises an intermediary module having a cooling system, the rotary electric machine and the inverter being located on opposite sides of and contiguously to the intermediary module. An end portion of a respective stator winding of the at least one stator winding extends from the rotary electric machine and is directly electrically connected to a respective electrical terminal of the inverter, said end portion of the stator winding passing through the intermediary module such that to be cooled by the cooling system of the intermediary module. The present invention, by using the cooling system of the intermediary module to actively cool the electrical connection between the rotary electric machine and the inverter, provides the substantial gain of allowing to use directly the stator winding to ensure the electrical connection between the rotary electric machine and the inverter. This would have been complex, or even impossible to achieve without the active cooling of said electrical connection.

In fact, a conventional solution to electrically connect the rotary electric machine and the inverter would have been to use an additional electrical conductor, namely a busbar, which would have been passively cooled, on one side, by a cooling system of the rotary electric machine, and on another side, by a cooling system of the inverter. Such a passive cooling does not dissipate as much heat as an active cooling. As a result, the additional electrical conductor shall have an increased cross-section to compensate the insufficient heat dissipation, which justifies the necessity of having a separate element for ensuring the electrical connection between the rotary electric machine and the inverter. Hence, compared to the previously described conventional solution, the invention allows to cool more efficiently the electrical connection between the rotary electric machine and the inverter, and to avoid having to use an additional electrical conductor between the rotary electric machine and the inverter.

Moreover, the invention gives the advantage of reducing the number of electrical connection points of the electric drive, compared to the conventional solution using the additional electrical conductors. The invention allows thus to simplify the manufacturing of the electric drive, and to reduce the related costs.

Advantageously, the rotary electric machine, the inverter, and the intermediary module are assembled so that to form a fully integrated assembly. The term fully integrated assembly shall be interpreted as the rotary electric machine, the inverter, and the gearbox of the electric drive are assembled and arranged in a compact manner. For example, the electric drive may comprise a housing made of a plurality of pieces attached together such that to cover the rotary electric machine, the inverter, and the gearbox. The housing of the electric drive may especially have a first opening between the rotary electric machine and the gearbox, and a second opening between the inverter and the gearbox. The fully integrated assembly allows thus to reduce the number of components of the electric drive and is more simple and less costly to produce. Advantageously, the intermediary module comprises a gearbox and the cooling system is configured to cool the gearbox. The gearbox is notably mechanically coupled to the rotary electric machine. Using the gearbox further allows to use an existing cooling system of the gearbox to cool both the gearbox and the electrical connection between the rotary electric machine and the inverter. The invention thus allows to avoid having to add an additional cooling system to actively cool said electrical connection.

Advantageously, the electric drive has a T-shape arrangement. Then, on one hand, the rotary electric machine and the inverter especially correspond to two top branches of the T-shape arrangement. On another hand, the gearbox namely corresponds to the middle branch of the T-shape arrangement. Such a T-shape arrangement allows to further enhance the compacity of the electric drive.

Advantageously, the stator has a plurality of stator windings, several stator windings of the plurality of stator windings having a respective end portion extending from the rotary electric machine and being directly electrically connected to a respective electrical terminal of the inverter. For example, in the context of the rotary electric machine having three-phases, three end portions of stator windings extend from the rotary electric machine such that to be directly each electrically connected to a respective electrical terminal of the inverter.

Advantageously, the cooling system channels a cooling fluid. Then, the end portion of the stator winding passing through the intermediary module may be immersed in the cooling fluid of the cooling system.

Advantageously, the cooling system comprises spraying means configured to spray a cooling fluid on the end portion of the stator winding passing through the intermediary module. Advantageously, the stator winding has a rectangular section, or alternatively a circular section. Although, the section of the stator winding is not limited to those shapes.

Advantageously, the rotary electric machine has a rotor supplied with a DC voltage. Preferably, a unique power converter is used for supplying both the AC voltage to the stator and the DC voltage to the rotor of the rotary electric machine.

A further aspect of the invention is an electric of a hybrid vehicle, comprising the electric drive as described previously for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of an electric drive according to an embodiment of the invention;
Figure 2 is a schematic diagram of an automotive electric or hybrid vehicle comprising the electric drive according to an embodiment of the invention.

### DETAILED DESCRIPTION

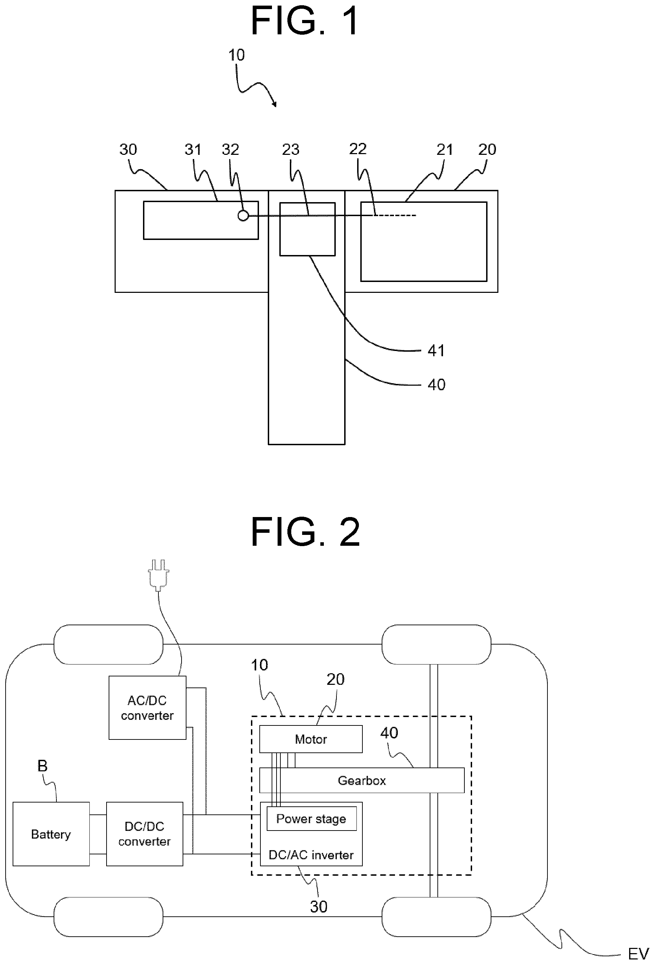

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents. In reference to Figure 2, an aspect of the invention is an electric vehicle or a hybrid electric automotive vehicle EV comprising wheels and an electric drive 10 configured to drive at least indirectly at least one of the wheels of the vehicle. The vehicle may comprise a high-voltage power supply battery B, preferably a rechargeable battery, for providing electric power to the electric drive.

Figure 1 illustrates schematically the electric drive 10 according to a further aspect of the invention. The electric drive 10 comprises a rotary electric machine 20 and an inverter 30 configured to be electrically connected to the rotary electric machine 20. The inverter 30 is advantageously configured to convert a direct current (DC) voltage coming from the high-voltage power supply battery into an alternating current (AC) voltage in order to supply a stator 21 of the rotary electric machine 20 with AC voltage. At least an output of the inverter is thus configured to be electrically connected to a respective stator winding 22 of the stator 21.

The electric drive 10 preferably forms a fully integrated assembly. The term fully integrated shall be interpreted as the rotary electric machine and the power electronics of the electric drive are advantageously arranged in a compact manner. Some components, especially electrical or non-electrical components, may advantageously be shared within the electric drive. For example, there may be less electrical conductors in such an electric drive. As another example, a single housing may be set up to cover both the rotary electric machine and the inverter. The fully integrated assembly presents the advantage of having a more compact electric drive, which has fewer components, is simpler and cheaper.

Besides, the rotary electric machine 20 may be a poly-phase, especially a three-phase, rotary electric machine supplied with a three-phase AC voltage. Then, the stator 21 may comprise a plurality of stator windings 22, each stator winding 22 corresponding to a phase of the rotary electric machine. In the rest of the description, only one stator winding 22 will be detailed, even though the invention may apply to several stator windings 22.

The rotary electric machine may comprise a casing covering, at least partially, both the stator and the rotor. The stator generally presents an annular shape and surrounds coaxially the rotor. Ordinarily, the stator comprises a stator body formed of a stack of stator laminations having a plurality of stator teeth projecting radially, and the stator windings wound around the stator teeth. As illustrated in Figure 1, the electric drive 10 further comprises an intermediary module 40 having a cooling system 41. The rotary electric machine 20 and the inverter 30 are located on opposite sides of and contiguously to the intermediary module 40. In other words, the rotary electric machine 20 is arranged on one side of the intermediary module 40, the inverter 30 being arranged on another side of the intermediary module 40, opposite to the side of the intermediary module 40 where the rotary electric machine 20 is arranged. More specifically, the rotary electric machine 20 and the inverter 30 may be aligned with one another.

In the following description, the invention will be described in the context of the intermediary module 40 comprising a gearbox. Then, the cooling system 41 is advantageously configured to cool the gearbox. The gearbox is notably mechanically coupled to the rotary electric machine 20. The rotary electric machine namely delivers mechanical power in order to ensure the propulsion of the vehicle to the wheels of the vehicle through the gearbox. Although, the intermediary module may consist of another system comprising a cooling system.

Then, an end portion 23 of a stator winding 22 extends from the rotary electric machine 20 and is directly electrically connected to a respective electrical terminal 32 of the inverter 30. In particular, the electrical terminal 32 may be arranged within a power stage 31 of the inverter 30. Said end portion 23 of the stator winding 22 further passes through the intermediary module 40, namely the gearbox, such that to be cooled by the cooling system 41 of the intermediary module 40. Preferably, the end portion 23 of the stator winding 22 is substantially aligned with the corresponding electrical terminal of the inverter such that to reduce a length of the end portion 23 of the stator winding 22 passing through the intermediary module 40. When the rotary electric machine 20 and the inverter 30 are especially aligned with one another, the length of the end portion 23 of the stator winding 22 passing through the intermediary module 40 is advantageously reduced.

As stated beforehand, in a configuration in which the stator 21 has a plurality of stator windings 22, several stator windings 22 of the plurality of stator windings 22 may have a respective end portion 23 extending from the rotary electric machine 20 and being directly electrically connected to a respective electrical terminal 32 of the inverter 30. For example, in the context of the three-phase rotary electric machine, three end portions 23 of stator windings 22 extend from the rotary electric machine 20 such that to be directly each electrically connected to a respective electrical terminal 32 of the inverter 30.

The present invention, by using the cooling system of the intermediary module to actively cool the electrical connection between the rotary electric machine and the inverter, provides the substantial gain of allowing to use directly the stator winding to ensure the electrical connection between the rotary electric machine and the inverter. This would have been complex, or even impossible to achieve without the active cooling of said electrical connection.

In fact, a conventional solution to electrically connect the rotary electric machine and the inverter would have been to use an additional electrical conductor, namely a busbar, which would have been passively cooled, on one side, by a cooling system of the rotary electric machine, and on another side, by a cooling system of the inverter. Such a passive cooling does not dissipate as much heat as an active cooling. As a result, the additional electrical conductor shall have an increased cross-section to compensate the insufficient heat dissipation, which justifies the necessity of having a separate element for ensuring the electrical connection between the rotary electric machine and the inverter. Hence, compared to the previously described conventional solution, the invention allows to cool more efficiently the electrical connection between the rotary electric machine and the inverter, and to avoid having to use an additional electrical conductor between the rotary electric machine and the inverter.

Moreover, the invention gives the advantage of reducing the number of electrical connection points of the electric drive, compared to the conventional solution using the additional electrical conductors. In fact, only the electrical connection between the end portion of the stator winding and the inverter should be implemented in the invention. Hence, the number of electrical connection points of the invention is advantageously twice less than the number of electrical connection points of the conventional solution using the additional electrical conductors The invention allows thus to simplify the manufacturing of the electric drive, and to reduce the related costs.

Using the gearbox further allows to use an existing cooling system of the gearbox to cool both the gearbox and the electrical connection between the rotary electric machine and the inverter. The invention thus allows to avoid having to add an additional cooling system to actively cool said electrical connection.

In a nutshell, the invention provides a solution which simplifies the electrical connection between the rotary electric machine and the inverter, and which further enhances the compacity of the electric drive.

Then, in a preferred manner, the electric drive 10 has a T-shape arrangement, the rotary electric machine 20 and the inverter 30 corresponding to two top branches of the T-shape arrangement, and the gearbox corresponding to the middle branch of the T-shape arrangement. Such a T-shape arrangement allows to further enhance the compacity of the electric drive.

Moreover, the rotary electric machine 20, the inverter 30, and the intermediary module 40, especially the gearbox, are preferably assembled so that to form the fully integrated assembly. In a similar manner as stated previously, the term fully integrated shall be interpreted as the rotary electric machine, the inverter, and the gearbox of the electric drive are assembled and advantageously arranged in a compact manner. In other words, the electric drive may advantageously combine into a compact assembly the electric motor (rotary electric machine), the power electronics (inverter), and the transmission (gearbox). The fully integrated assembly allows to reduce the number of components of the electric drive, for instance by a sharing a single housing. Thus, the fully integrated electric drive is more simple and less costly to produce.

In particular, the electric drive 10 may comprise a housing made of a plurality of pieces attached together such that to cover the rotary electric machine 20, the inverter 30, and the gearbox. The housing of the electric drive 10 may especially have a first opening between the rotary electric machine and the gearbox. The housing of the electric drive 10 may also have a second opening between the inverter and the gearbox. The quantity of material required to build the housing of the electric drive 10 is thus reduced compared to a solution in which the rotary electric machine, the inverter, and the gearbox have each their own housing. Moreover, the end portion of the stator winding may be configured to pass through the first opening and the second opening such that to traverse the gearbox.

The power stage of the inverter may advantageously be arranged close to the gearbox, such that to ease the implementation of the electrical connection between the end portion of the stator winding and the power stage of the inverter.

The end portion of the stator winding may be welded to or bolted to the respective electrical terminal of the inverter, such that to perform the electrical connection between the stator winding and the inverter.

The end portion of the stator winding may advantageously be cooled using a cooling fluid. For instance, the cooling fluid may be an oil, which is the most common cooling fluid used for cooling a gearbox, or alternatively water.

For instance, the cooling system 41 of the gearbox may channel the cooling fluid. Then, the end portion 23 of the stator winding 22 passing through the gearbox may advantageously be immersed in the cooling fluid of the cooling system 41. For example, the cooling system 41 may comprise a chamber channeling the cooling fluid. Then, the chamber is configured to receive the end portion 23 of the stator winding 22.

Alternatively, the cooling system 41 of the gearbox may comprise spraying means configured to spray the cooling fluid on the end portion 23 of the stator winding 22 passing through the gearbox. Besides, the stator winding 22 may notably have a rectangular section, or alternatively a circular section. Although, the section of the stator winding is not limited to those shapes.

The stator winding is notably made of an electrically conductive material, for instance including a copper material. Moreover, the stator winding may be surrounded by an electrical insulation system, for instance made of a plastic material.

Furthermore, the electric drive may comprise a mechanical support system configured to ensure a mechanical handling of the end portion of the stator winding.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. An electric drive (10) comprising:
- a rotary electric machine (20) having a stator (21);
- an inverter (30) configured to be electrically connected to the rotary electric machine (20); **characterized in that** the electric drive (10) further comprises an intermediary module (40) having a cooling system (41), the rotary electric machine (20) and the inverter (30) being located on opposite sides of and contiguously to the intermediary module (40),
an end portion (23) of a stator winding (22) of the stator (21) extending from the rotary electric machine (20) and being directly electrically connected to a respective electrical terminal (32) of the inverter (30), said end portion (23) of the stator winding (22) passing through the intermediary module (40) such that to be cooled by the cooling system (41) of the intermediary module (40).

2. The electric drive (10) as claimed in the claim 1, wherein the rotary electric machine (20), the inverter (30), and the intermediary module (40) are assembled so that to form a fully integrated assembly.

3. The electric drive (10) as claimed in any of the preceding claims, wherein the intermediary module (40) comprises a gearbox and the cooling system (41) is configured to cool the gearbox.

4. The electric drive (10) as claimed in the previous claim, wherein the electric drive (10) has a T-shape arrangement, the rotary electric machine (20) and the inverter (30) corresponding to two top branches of the T-shape arrangement and the gearbox corresponding to the middle branch of the T-shape arrangement.

5. The electric drive (10) as claimed in any of the preceding claims, wherein the stator has a plurality of stator windings (22), several stator windings (22) of the plurality of stator windings (22) having a respective end portion (23) extending from the rotary electric machine (20) and being directly electrically connected to a respective electrical terminal (32) of the inverter (30).

6. The electric drive (10) as claimed in any of the preceding claims, wherein the cooling system (41) channels a cooling fluid, the end portion (23) of the stator winding (22) passing through the intermediary module (40) being immersed in the cooling fluid of the cooling system (41).

7. The electric drive (10) as claimed in any of the claims 1 to 5, wherein the cooling system (41) comprises spraying means configured to spray a cooling fluid on the end portion (23) of the stator winding (22) passing through the intermediary module (40).

8. The electric drive (10) as claimed in any of the preceding claims, wherein the stator winding (22) has a rectangular section.

9. An electric or a hybrid vehicle (EV) comprising the electric drive (10) according to any of the preceding claims.
